# DEMANDE DE BREVET EUROPEEN

(11) **EP 2 277 677 A2**
(43) Date de publication de la demande: **26.01.2011**
(21) Numéro de dépôt: 10169962.7
(22) Date de dépôt: 19.07.2010
(51) Int. Cl.: B29C 33/30, B29C 49/48

(54) **Système d'assemblage pour unité de moulage et unité de moulage comportant un tel système**

(30) Priorité: 23.07.2009 FR 0955177
(71) Demandeur: SIDEL PARTICIPATIONS, 76930 Octeville-sur-Mer (FR)
(72) Inventeur: Langlois, Jean-Christope, 76930 Octeville-sur-Mer (FR)
(74) Mandataire: Cabinet Plasseraud

(57) **Abrégé**

L'invention concerne un système d'assemblage pour unité de moulage, permettant l'assemblage d'au moins une pièce (11) interchangeable de moulage, dans un logement aménagé sur un support (12) de forme complémentaire, ledit système comprenant, sur l'un des côtés de ladite pièce (11) interchangeable qui est parallèle à son axe, au moins un organe (2) fixe faisant office de butée et, de l'autre côté, un organe (3) de verrouillage mobile entre une position active de verrouillage et une position inactive de verrouillage. L'organe (3) de verrouillage mobile comporte des moyens de rappel élastique pour le faire passer automatiquement de ladite position inactive de verrouillage à ladite position active de verrouillage, l'organe (3) de verrouillage étant apte à être passé en position inactive manuellement par un opérateur. Le système est remarquable en ce que comprend sur l'un des côtés de ladite pièce (11) interchangeable qui est parallèle à son axe, au moins un organe (2) fixe faisant office de butée, l'organe (3) étant positionné de l'autre côté de la pièce interchangeable.

## Description

La présente demande concerne un système d'assemblage pour une unité de moulage, permettant l'assemblage d'au moins une pièce interchangeable de moulage dans un logement aménagé sur un support de forme complémentaire, ledit système comprenant, sur l'un des côtés de ladite pièce interchangeable qui est parallèle à son axe, au moins un organe fixe faisant office de butée et, de l'autre côté, un organe de verrouillage mobile entre une position active de verrouillage et une position inactive de verrouillage.

L'invention se rapporte également à une unité de moulage équipée d'un tel système.

L'unité de moulage conforme à l'invention est destinée en particulier, mais non exclusivement, au moulage de récipients en matériau thermoplastique comme, par exemple, des bouteilles, le moulage s'effectuant par une opération de soufflage, ou d'étirage-soufflage, sur une machine appropriée.

L'invention a pour objectif de mettre à disposition un système qui permet notamment de faciliter les changements d'aspect et/ou de formes des bouteilles.

Le document FR 2 733 176 (SIDEL) décrit une unité de moulage dans laquelle des moyens sont prévus pour permettre un changement rapide et simple des empreintes de moulage.

Cette unité de moulage comprend une console sur laquelle est installée une structure qui comprend deux porte-moules ; chaque porte-moule supporte un demi-moule qui comprend : - une pièce interchangeable, généralement appelée demi-coquille, qui porte l'empreinte du récipient à façonner et, - une structure porteuse pour la demi-coquille.

Cette structure porteuse est fixée par des moyens appropriés sur le porte-moule et elle comporte des moyens pour permettre un assemblage de la demi-coquille.

Ces moyens d'assemblage sont généralement constitués de pattes saillantes qui sont fixées, par vis, sur le bord de la structure porteuse, en retrait du plan de joint du moule.

Les pattes comportent une lumière pour le passage de la vis de fixation et cette lumière permet de déplacer lesdites pattes radialement, dans leur logement, entre une position inactive de verrouillage de la demi-coquille et une position active de verrouillage. La demi-coquille est libérée dès que les pattes sont débloquées et repoussées vers l'extérieur, sans qu'il soit nécessaire de démonter totalement les vis.

Toutefois, ce type de montage nécessite l'utilisation d'un outillage approprié pour desserrer les vis et pour les resserrer, avec tous les risques inhérents à une telle utilisation (comme la chute des vis, l'oubli du resserrage... etc.).

A l'origine de l'invention, on a donc cherché à mettre en oeuvre d'autres moyens d'assemblage qui seraient mobiles entre une position active de verrouillage et une position inactive de verrouillage, lesquels moyens seraient plus rapides à mettre en oeuvre, par exemple sans avoir recours à l'utilisation d'outils pour passer d'une position à l'autre. On a en particulier cherché à mettre au point des moyens qui ne nécessitent pas d'avoir à dévisser des vis pour débloquer la patte et/ou qui n'imposent pas une opération de vissage pour fixer la patte.

On connait du document FR 2 902 688 un système d'assemblage entre un fond de moule et un support de fond de moule, qui comprend au moins un organe de verrouillage qui est mobile entre une position active de verrouillage et une position inactive de verrouillage, et qui comporte des moyens de rappel élastique pour le faire passer automatiquement de ladite position inactive de verrouillage à ladite position active de verrouillage, l'organe de verrouillage étant apte à être passé en position inactive manuellement par un opérateur. Bien qu'assurant un verrouillage plus simple que celui prévu dans le document FR 2 733 176, un tel système n'est pas adapté au verrouillage en position d'une pièce qui glisse par rapport à une autre, comme il peut être le cas pour un insert qui est glissé dans la paroi latérale d'un moule avant d'y être fixé.

L'invention concerne un système d'assemblage du type précité et qui, conformément aux revendications, est remarquable en ce qu'il comprend, sur l'un des côtés de ladite pièce interchangeable qui est parallèle à son axe, au moins un organe fixe faisant office de butée, l'organe étant positionné de l'autre côté de la pièce interchangeable.

Ainsi réalisé, le système d'assemblage permet de placer correctement la pièce interchangeable pour la verrouiller dans cette position. La butée permet notamment de pallier les problèmes liés au glissement d'une pièce interchangeable sur son support.

Le système selon l'invention peut également comporter les caractéristiques suivantes, prises séparément ou en combinaison :
- l'organe de verrouillage est fixé audit support ;
- l'organe de verrouillage comprend un système de vis à bille, comportant un ressort travaillant en compression à l'extrémité duquel la bille prend appui, ledit ressort constituant lesdits moyens de rappel élastique, et la pièce interchangeable comporte un logement radial coopérant avec la bille quand la pièce interchangeable et le support sont solidarisés, lequel logement radial présente une forme complémentaire à celle de ladite bille ;
- l'organe de verrouillage est un système à pêne et à gâche, comprenant un ressort travaillant en compression à l'extrémité duquel le pêne prend appui, ledit ressort constituant lesdits moyens de rappel élastique, ladite gâche est ménagée sur un bord de ladite pièce interchangeable et ledit pêne est fixé au voisinage d'un bord du support, ledit pêne venant en prise avec ladite gâche en position active de verrouillage ;
- l'organe de verrouillage est un ressort à lame qui est fixé sur le support par l'une de ses extrémités, ledit ressort à lame présentant une partie dont la courbure suit la forme du logement du support ainsi qu'un bossage saillant de ladite partie, et en ce que la pièce interchangeable comporte un logement radial coopérant avec ledit bossage quand la pièce interchangeable et le support sont solidarisés, lequel logement radial présente une forme complémentaire dudit bossage dudit ressort à lame.

L'invention a également pour objet de s'appliquer à toute unité de moulage comprenant deux demi-moules, l'un au moins des deux demi-moules comportant :
- au moins une pièce interchangeable présentant une empreinte de moulage,
- un support comportant un logement d'accueil pour ladite pièce interchangeable,
- et des moyens d'assemblage de ladite pièce interchangeable sur ledit support.

L'invention concerne une unité de moulage telle que définie ci-dessus, qui est remarquable en ce que les moyens d'assemblage sont réalisés par un système d'assemblage conforme à l'invention, tel que défini ci-dessus.

L'unité de moulage conforme à l'invention peut comporter les caractéristiques suivantes :
- ladite pièce interchangeable est un insert et ledit support est une demi-coquille ;
- ladite pièce interchangeable est une demi-coquille et ledit support est une structure porteuse pour la demi-coquille ;
- l'unité de moulage comporte au moins deux pièces interchangeables, l'une des deux dites pièces interchangeables étant un insert et l'autre étant une demi-coquille, ladite demi-coquille constituant ledit support de l'insert, ladite unité de moulage comportant également un support pour la demi-coquille réalisé par une structure porteuse de demi-coquille ;
- ladite pièce interchangeable est semi cylindrique et elle comporte au moins une gorge périphérique qui coopère avec au moins un rail réalisé saillant de la surface dudit logement dudit support.

L'invention sera davantage comprise à la lumière des modes de réalisation qui vont maintenant être présentés, en faisant référence aux figures annexées parmi lesquelles :
- la figure 1 montre une structure possible porte-moule avec une unité de moulage conforme à l'invention, en vue de face, comprenant une demi-coquille fixée sur une structure porteuse de demi-coquille, la structure porteuse étant logée dans la structure porte-moule,
- la figure 2 est une vue en coupe suivant l'axe II-II de la figure 1,
- la figure 3 montre une unité de moulage conforme à une variante de réalisation selon l'invention, en vue de face, comprenant un insert fixé sur une demi-coquille,
- la figure 4 est une vue en coupe suivant l'axe IV-IV de la figure 3,
- la figure 5 est une vue en coupe d'une unité de moulage selon une autre variante de réalisation conforme à l'invention,
- la figure 6 montre un premier mode de réalisation d'un organe de verrouillage vu en coupe transversale de l'unité de moulage,
- la figure 7 montre un second mode de réalisation d'un organe de verrouillage vu en coupe radiale de l'unité de moulage,
- la figure 8 est une vue de dessus de l'organe de verrouillage montré en figure 7, en position active de verrouillage,
- la figure 9 est une vue de dessus d'une unité de moulage conforme à l'invention, comprenant un organe de verrouillage selon encore une autre variante conforme à l'invention,
- la figure 10 est une vue en coupe radiale de l'organe de verrouillage montré en figure 9,
- et la figure 11 est une vue en perspective de l'organe de verrouillage illustré sur les figures 9 et 10.

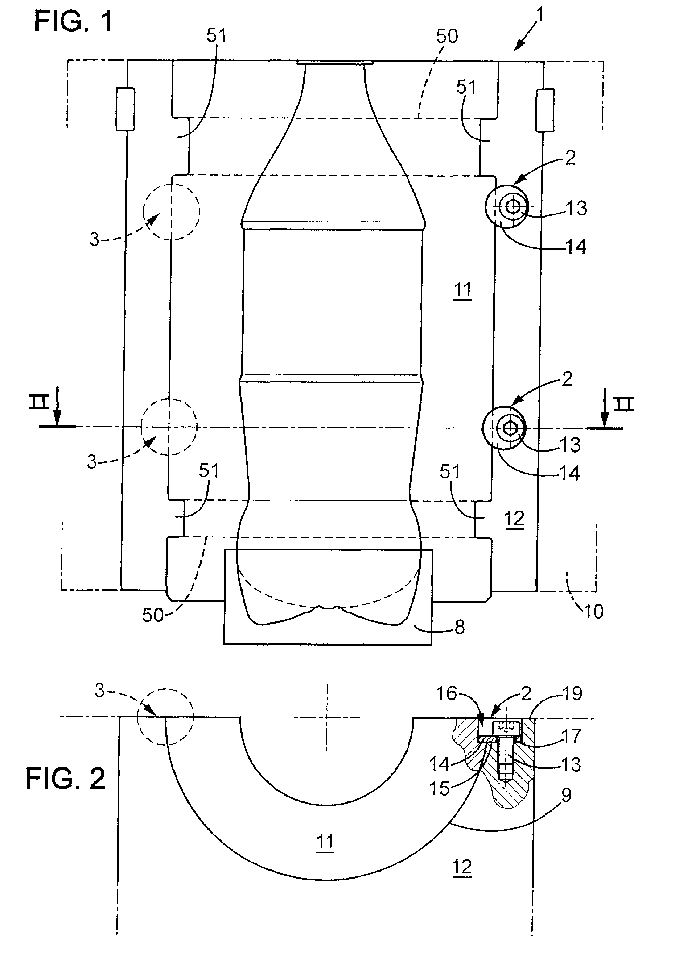

Seule une partie d'une unité de moulage conforme à l'invention a été représentée sur la figure 1. En effet, de manière en soi classique, une unité de moulage comporte deux demi-moules, et un fond de moule amovible. Seuls un demi-moule 1 et une partie 8 du fond de moule ont été illustrés en figure 1.

La figure 1 montre, de façon partielle, le demi-moule 1 qui est placé dans une structure 10 appelée porte-moule, laquelle structure 10 est elle-même portée, de façon classique, par une console (non représentée) d'une unité de moulage.

Le demi-moule 1 comprend généralement une partie qui est gravée avec une empreinte de récipient à façonner, partie que l'on appelle demi-coquille 11, et une autre partie qui constitue le support de cette coquille 11 et que l'on appelle « porte-coquille » ou structure 12 porteuse pour la demi-coquille 11.

Dans le cadre de cet exemple de réalisation, l'empreinte constitue un négatif d'une forme d'une partie d'une bouteille à former.

La demi-coquille 11 constitue une pièce interchangeable pour l'unité de moulage car elle est montée amovible sur la structure 12 porteuse de demi-coquille, constituant sont un support.

La structure 12 porteuse présente un logement 9 qui est aménagé pour accueillir la demi-coquille 11 (figure 2).

La demi-coquille 11 est de forme semi cylindrique, et le logement 9 est de forme complémentaire.

Dans l'exemple montré, la demi-coquille 11 comporte deux gorges 50 périphériques (illustrées en traits mixtes sur la figure 1), et ces gorges 50 coopèrent chacune avec un rail 51, les rails 51 étant réalisés saillants de la surface du logement 9.

Dans le cadre de ce mode de réalisation, pour placer la demi-coquille 11 sur la structure 12 porteuse de demi-coquille, il suffit d'insérer les rails 51 dans les gorges 50 et de faire glisser la demi-coquille 11 sur la surface du logement 9, ce qui impose à la demi-coquille 11 de réaliser un mouvement courbe.

Il devra être entendu que cette structure avec gorges et rails n'est pas limitative, et que l'invention pourrait concerner d'autres modes de réalisation sans gorge ni rail.

Pour que la demi-coquille 11 soit maintenue en position dans le logement 9, l'unité de moulage 1 conforme à l'invention comporte des moyens d'assemblage rapide qui vont maintenant être présentés.

Les moyens d'assemblage comportent un organe 2 qui est fixe par rapport à la structure porteuse 12, et un organe 3 de verrouillage qui est un organe monté mobile entre deux positions : une position active de verrouillage, assurant la retenue de la demi-coquille 11, et une position inactive de verrouillage dans laquelle la demi-coquille 11 est libérée et peut être désassemblée de la structure 12.

L'organe 3 de verrouillage est ainsi monté escamotable pour permettre de retirer et de replacer à volonté la demi-coquille 11, mais il est également réalisé à retour automatique en position active de verrouillage.

Cela signifie que l'organe 3 est un organe qui ne nécessite aucune action particulière pour se placer en position de verrouillage.

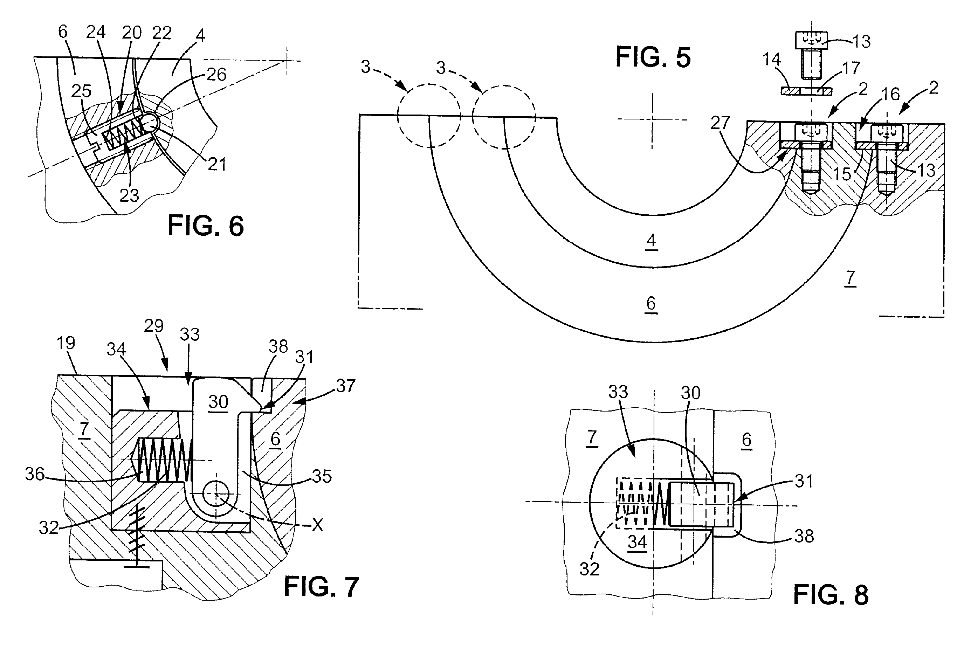

L'organe 3 n'a pas explicitement été représenté sur les figures 1 à 5, car il peut être réalisé de différentes manières, comme on le verra par la suite lors de la description des différents modes de réalisation montrés sur les figures 6 à 11.

Il devra être compris que l'organe 3 peut être réalisé selon l'un quelconque de ces modes de réalisation, ou selon un mode de réalisation équivalent.

L'organe 2 fixe est encastré sensiblement au niveau du plan de joint du demi-moule, et l'organe 3 de verrouillage est positionné lui aussi au voisinage dudit plan de joint de façon à effectuer un verrouillage efficace de la demi-coquille 11 par rapport à son support constitué par la structure 12 porteuse.

Comme on peut le voir en particulier sur les figures 1 et 2, l'organe 2 fixe est solidaire de la structure 12 porteuse de la demi-coquille 11.

L'organe 2 fixe comporte une vis 13, vissée dans la structure 12 porteuse, et une rondelle 14.

La vis 13 assure le maintien de la rondelle 14 dans le fond 15 d'une cavité 16 ménagée partiellement dans la structure 12 porteuse de la demi-coquille 11 et dans la demi-coquille 11.

Pour ce faire, la rondelle 14 présente un trou traversant 17 qui est réalisé excentré dans la rondelle, de manière à disposer d'une partie la plus large possible, apte à venir en appui à la fois contre le fond 15 de la cavité 16 réalisée à la fois dans la structure porteuse 12 et dans la demi-coquille 11.

La rondelle 14 fait ainsi office de butée contre laquelle le bord de la demi-coquille 11 vient se positionner lorsqu'elle est placée dans le logement 9 de la structure 12 porteuse.

Le désaxage de la vis 13 qui maintient la rondelle 14 est en particulier visible sur la figure 1.

Par ailleurs, la profondeur de la cavité 16 (accueillant la rondelle et la vis) est au moins égale à l'épaisseur de la rondelle additionnée de la hauteur de la tête de la vis 13.

De cette façon, lorsque la rondelle 14 est fixée dans la cavité 16, la tête de la vis 13 n'est pas en saillie du bord 19 du demi-moule 1, ce qui permet de ne pas gêner la fermeture de l'unité de moulage.

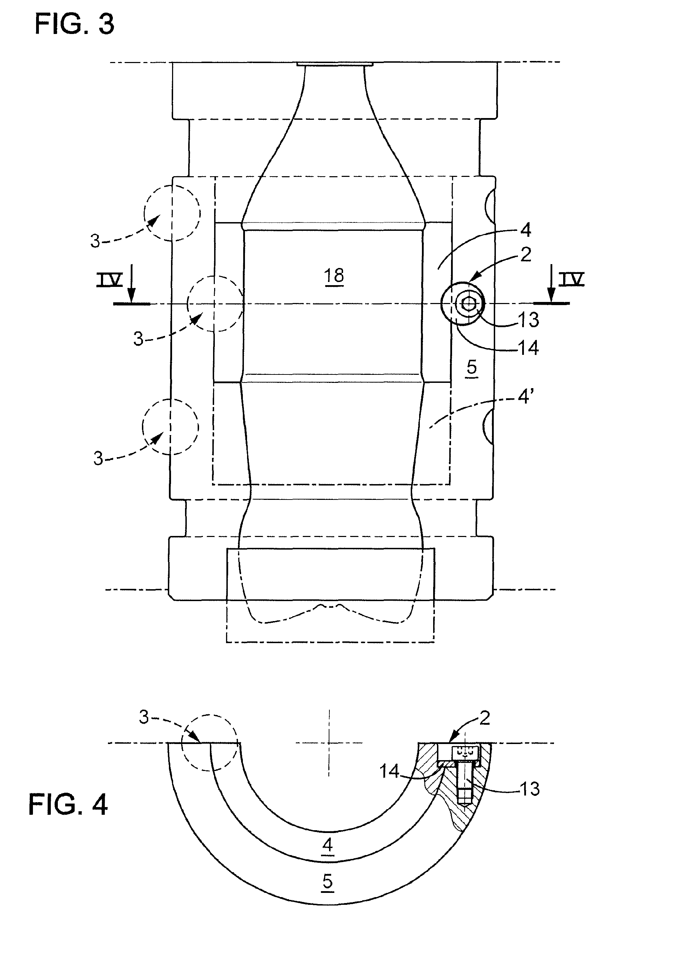

Les figures 3 et 4 illustrent un autre mode de réalisation d'une unité de moulage conforme à l'invention.

Suivant ce second mode de réalisation, l'unité de moulage comporte un insert 4, constituant une pièce interchangeable, qui est fixé de façon amovible sur une demi-coquille 5

Suivant ce mode de réalisation, comme illustré figure 3, l'empreinte de la bouteille est gravée sur plusieurs pièces ; elle est notamment gravée sur la demi-coquille 5 et sur l'insert 4 qui est associé à cette demi-coquille 5.

La demi-coquille 5 pourrait également être réalisée pour accueillir plusieurs inserts sans sortir du cadre de l'invention. C'est dans cet objectif d'interprétation qu'un insert supplémentaire 4' a été représenté en traits mixtes sur la figure 3.

L'insert 4 est représenté au centre de la figure 3 en traits forts.

Il se situe, par exemple, au niveau de la zone d'étiquetage de façon à façonner une empreinte 18.

L'insert 4 est fixé de façon amovible sur la demi-coquille 5 grâce à un organe fixe 2, identique par exemple à celui décrit précédemment (suivant le mode de réalisation illustré sur les figures 1 et 2) et à un organe 3 de verrouillage mobile qui peut être l'un de ceux montrés en figures 6 à 11.

La figure 5 montre encore un autre mode de réalisation d'une unité de moulage conforme à l'invention.

L'unité de moulage comporte un insert 4, une demi-coquille 6 et une structure 7 porteuse de la demi-coquille 6.

D'une part, la demi-coquille 6 est montée amovible sur la structure porteuse 7 grâce à un organe 2 fixe (tel que décrit précédemment) et un organe 3 de verrouillage mobile.

D'autre part, la demi-coquille 6 constitue un support pour l'insert 4, l'insert 4 étant monté amovible sur la demi-coquille 6 grâce à un organe 2 fixe (tel que décrit précédemment) et un organe 3 de verrouillage mobile.

On va maintenant décrire plusieurs modes de réalisation d'un organe 3 de verrouillage qui est mobile entre deux positions (définies précédemment).

Pour simplifier la compréhension, les modes de réalisation des organes 3 de verrouillage qui vont être présentés sont décrits comme étant montés sur le support 6 ou 7 du mode de réalisation illustré en figure 5.

Ainsi, suivant les modes de réalisation qui vont être présenté, l'organe de verrouillage sera tantôt fixé sur le support 6 accueillant l'insert 4 ou sur le support 7 accueillant la demi-coquille 6.

Sur la figure 6, est illustré un premier mode de réalisation d'un organe 20 de verrouillage mobile.

Cet organe 20 comporte un système de vis à bille.

Le système de vis à bille comporte une bille 21 placée à une extrémité 22 d'un ressort 23 à boudin travaillant en compression.

L'autre extrémité 24 du ressort 23 à boudin prend appui au fond d'un réceptacle 25,lequel réceptacle 25 est vissé ou enfoncé à force dans un trou traversant 28 réalisé dans la demi-coquille 6 (ou tout autre support : cela peut également être la demi-coquille 5 ou la structure 12 porteuse).

Le ressort 23 présente, au repos, une longueur sensiblement égale à la profondeur du réceptacle 25, de sorte que la bille 21 est partiellement saillante du réceptacle 25.

Parallèlement, un logement radial 26 hémisphérique est ménagé dans la paroi de l'insert 4 (ou tout autre pièce interchangeable : cela pourrait également être la demi-coquille 11).

Le logement radial 26 présente une forme sensiblement complémentaire de celle de la bille 21.

Le logement radial 26 vient se placer en regard du réceptacle 25 du support (demi-coquille 6) quand l'insert 4 est placé dans ledit support.

Quand l'insert 4 est placé sur la demi-coquille 6 constituant son support, dans un premier temps, la surface externe de l'insert 4 appuie contre la bille 21 qui rentre dans le réceptacle 25 et qui contraint alors le ressort 23 en exerçant une force d'appui sur son extrémité 22.

Quand l'extrémité 27 de l'insert 4 vient prendre appui contre la rondelle 14, le logement radial 26 se trouve en regard du réceptacle 25 comprenant le ressort 23 et la bille 21.

Sous l'action du ressort 23, la bille 21 est poussée dans le logement radial 26 et bloque ainsi en position l'insert 4 par rapport à la demi-coquille 6.

Ainsi, l'insert 4 est fixé sur la demi-coquille 6 manuellement, sans utiliser d'outil particulier, et la bille 21, insérée dans le logement radial 26, empêche tout mouvement de l'insert 4 par rapport à la demi-coquille 6, dans n'importe quelle direction.

Un second mode de réalisation d'un organe 3 de verrouillage mobile à retour automatique est illustré sur les figures 7 et 8.

L'organe de verrouillage à retour automatique est réalisé par un système 29 à pêne 30 et à gâche 31.

Le pêne 30 et la gâche 31 sont aménagés respectivement sur le bord 19 de la structure 7 porteuse (et donc du demi-moule 1) et sur le bord 37 de la demi-coquille 6.

Le pêne 30 est monté à une extrémité d'un ressort 32 travaillant en compression.

Ce système 29 à pêne est logé dans un forage 33 réalisé sur le bord 19 et il est constitué d'un boîtier 34 cylindrique qui comporte une fente 35 pour loger ledit pêne 30 et une cavité 36 faisant office de logement pour le ressort 32.

La fente 35 présente une profondeur supérieure à la hauteur du pêne 30, de sorte que l'extrémité du pêne 30 ne soit pas saillante au-dessus du bord 19 du demi-moule 1, comme expliqué précédemment.

Le pêne 30 comporte une première extrémité qui pivote autour d'un axe X sous l'action du ressort 32, et une seconde extrémité coudée, en forme de crochet, apte à venir en prise dans la gâche 31 qui va maintenant être présentée.

La gâche 31 est réalisée par une encoche 38 ménagée dans le bord 37 de la demi-coquille 6, en regard de la fente 35 quand la demi-coquille 6 et la structure 7 porteuse sont solidarisées.

De cette façon, l'extrémité du pêne 30 formant crochet s'engage dans la gâche 31 sous l'action du ressort 32, quand la fente 35 se trouve en regard de l'encoche 38.

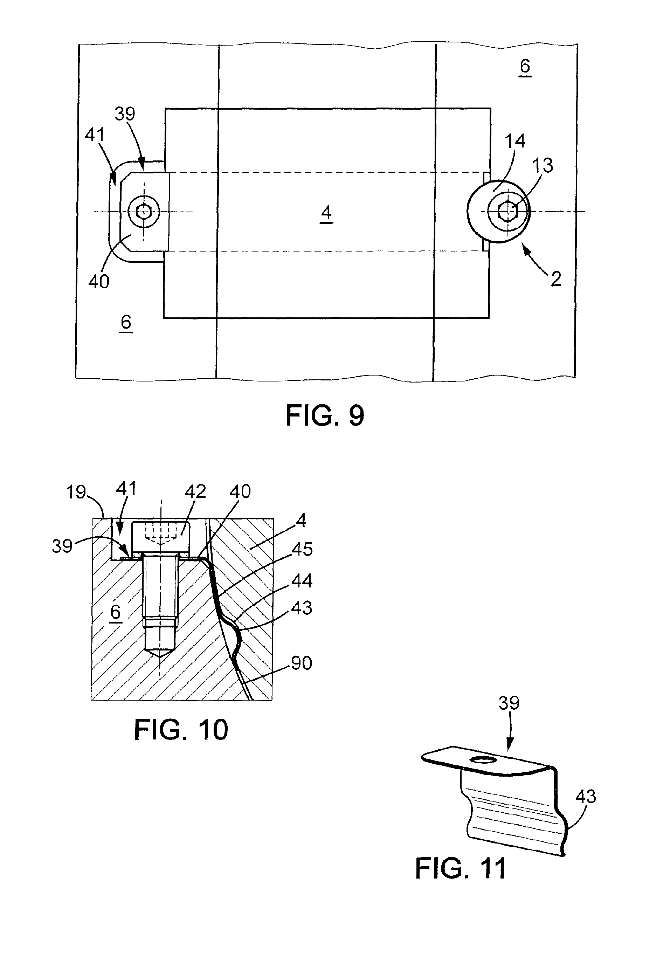

Un troisième mode de réalisation d'un organe 3 de verrouillage à retour automatique est illustré sur les figures 9 à 11.

L'organe de verrouillage est réalisé par un ressort à lame 39.

Le ressort à lame 39 présente une extrémité 40 coudée, fixée dans une cavité 41 qui est ménagée dans le bord 19 de la demi-coquille 6.

L'extrémité 40 y est fixée par une vis 42.

La profondeur de la cavité 42 est au moins égale à hauteur de la tête de la vis 42 additionnée de l'épaisseur du ressort à lame 39, pour des raisons exposées précédemment, concernant la bonne fermeture de l'unité de moulage 1.

A l'opposé de l'extrémité coudée 40, le ressort à lame présente un bossage 43 courrant sur toute sa largeur, lequel bossage est saillant et dirigé vers l'intérieur de l'unité de moulage, vers l'insert 4.

L'insert 4 comporte un logement radial 44, qui vient en regard du bossage 43 quand l'insert 4 et la demi-coquille 6 sont solidarisés.

Le logement 44 présente une forme complémentaire de celle du bossage 43, comme on peut le voir en particulier sur la figure 10.

Entre le bossage 43 et l'extrémité coudée 40 du ressort à lame 39, ce dernier comporte une partie 45 dont la forme épouse la forme de la courbure du logement 90 d'accueil de l'insert 4, le logement 90 étant ménagé dans la demi-coquille 6.

De manière similaire aux autres modes de réalisation, quand l'insert 4 est placé dans la demi-coquille 6, de sorte que son extrémité prend appui contre la rondelle 14, l'organe de verrouillage, constitué par le bossage 43, est enclenché, c'est-à-dire qu'il se coince dans le logement 44 de sorte à maintenir en place l'insert 4 dans la demi-coquille 6.

On comprend de la description qui précède que l'invention permet de fixer facilement, sous l'action de moyens de rappel élastique et sans utiliser d'outil, une pièce interchangeable dans un support.

L'invention permet ainsi de gagner du temps lors du changement des pièces interchangeables. En effet, grâce à l'invention, un insert de moule peut ainsi être changé en quelques secondes, alors que les systèmes actuels nécessitent d'arrêter les machines de l'installation pendant quelques minutes.

On comprend de la description qui précède comment l'invention permet d'améliorer les cadences de production en réduisant considérablement les temps réservés aux changements des inserts dans les moules.

Cela permet notamment de mettre à disposition des unités de moulage qui sont équipées pour accueillir plusieurs inserts, ce qui offre à un utilisateur de plus grandes possibilités pour réaliser des bouteilles (ou autres récipients) de formes différentes.

Il devra toutefois être compris que l'invention n'est pas limitée aux modes de réalisation qui sont présentés sur les figures annexées, et qu'elle pourrait s'étendre à d'autres variantes de réalisations.

Par exemple, le système d'assemblage pourrait comporter deux organes de verrouillage mobiles, disposés de part et d'autre d'un demi-moule, sans sortir du cadre de l'invention.

## Revendications

1. Système d'assemblage pour unité de moulage, permettant l'assemblage d'au moins une pièce (4 ; 6 ; 11) interchangeable de moulage, dans un logement (9, 90) aménagé sur un support (5 ; 6 ; 7 ; 12) de forme complémentaire, ledit système comprenant au moins un organe (3 ; 20 ; 29 ; 39) de verrouillage mobile entre une position active de verrouillage et une position inactive de verrouillage, ledit organe (3 ; 20 ; 29 ; 39) de verrouillage mobile comportant des moyens (23 ; 32 ; 39) de rappel élastique pour le faire passer automatiquement de ladite position inactive de verrouillage à ladite position active de verrouillage, l'organe (3 ; 20 ; 29 ; 39) de verrouillage étant apte à être passé en position inactive manuellement par un opérateur, **caractérisé en ce qu'**il comprend sur l'un des côtés de ladite pièce (4 ; 6 ; 11) interchangeable qui est parallèle à son axe, au moins un organe (2) fixe faisant office de butée, l'organe (3 ; 20 ; 29 ; 39) étant positionné de l'autre côté de la pièce interchangeable.

2. Système d'assemblage selon la revendication 1, **caractérisé en ce que** ledit organe (3 ; 20 ; 29 ; 39) de verrouillage est fixé audit support (5 ; 6 ; 7 ; 12).

3. Système d'assemblage selon l'une quelconque des revendications précédentes, **caractérisé en ce que** l'organe de verrouillage comprend un système (20) de vis à bille (21), comportant un ressort (23) travaillant en compression à l'extrémité duquel la bille (21) prend appui, ledit ressort (23) constituant lesdits moyens de rappel élastique, et **en ce que** la pièce (4) interchangeable comporte un logement (26) radial coopérant avec la bille (21) quand la pièce (4) interchangeable et le support (6) sont solidarisés, lequel logement (26) radial présente une forme complémentaire à celle de ladite bille (21).

4. Système d'assemblage selon la revendication 1 ou 2, **caractérisé en ce que** l'organe de verrouillage (29) est un système à pêne (30) et à gâche (31), comprenant un ressort (32) travaillant en compression à l'extrémité duquel le pêne (30) prend appui, ledit ressort (32) constituant lesdits moyens de rappel élastique, **en ce que** ladite gâche (31) est ménagée sur un bord (37) de ladite pièce (6) interchangeable et ledit pêne (30) est fixé au voisinage d'un bord (19) du support (7), ledit pêne (30) venant en prise avec ladite gâche (31) en position active de verrouillage.

5. Système d'assemblage selon la revendication 1 ou 2, **caractérisé en ce que** l'organe de verrouillage est un ressort (39) à lame qui est fixé sur le support (6) par l'une (40) de ses extrémités, ledit ressort (39) à lame présentant une partie (45) dont la courbure suit la forme du logement (90) du support (6) ainsi qu'un bossage (43) saillant de ladite partie (45), et **en ce que** la pièce (4) interchangeable comporte un logement (44) radial coopérant avec ledit bossage (43) quand la pièce (4) interchangeable et le support (6) sont solidarisés, lequel logement (44) radial présente une forme complémentaire dudit bossage (43) dudit ressort à lame (39).

6. Unité de moulage d'au moins un article par soufflage ou étirage-soufflage, laquelle unité comprend notamment deux demi-moules (1) et l'un au moins des deux demi-moules comporte :
- au moins une pièce (4 ; 6) interchangeable présentant une empreinte de moulage,
- un support (5 ; 6 ; 7) comportant un logement d'accueil (9 ; 90) pour ladite pièce (4 ; 6) interchangeable,
- et des moyens d'assemblage de ladite pièce interchangeable sur
ledit support,
**caractérisée en ce que** les moyens d'assemblage sont réalisés par un système d'assemblage selon l'une quelconque des revendications 1 à 5.

7. Unité de moulage selon la revendication 6, **caractérisée en ce que** ladite pièce interchangeable est un insert (4) et **en ce que** ledit support est une demi-coquille (5).

8. Unité de moulage selon la revendication 6, **caractérisée en ce que** ladite pièce interchangeable est une demi-coquille (6) et **en ce que** ledit support est une structure (7) porteuse pour la demi-coquille (6).

9. Unité de moulage selon la revendication 6, **caractérisée en ce qu'**elle comporte au moins deux pièces interchangeables (4 ; 6), l'une des deux dites pièces interchangeables étant un insert (4) et l'autre étant une demi-coquille (6), ladite demi-coquille (6) constituant ledit support de l'insert (4), ladite unité de moulage comportant également un support pour la demi-coquille réalisé par une structure (7) porteuse de demi-coquille (6).

10. Unité de moulage selon l'une quelconque des revendications 6 à 9, **caractérisée en ce que** ladite pièce interchangeable (11) est semi cylindrique et **en ce qu'**elle comporte au moins une gorge (50) périphérique qui coopère avec au moins un rail (51) réalisé saillant de la surface dudit logement (9) dudit support (12).
